# EUROPÄISCHE PATENTSCHRIFT

(11) **EP 0 504 437 B1**
(45) Veröffentlichungstag und Bekanntmachung des Hinweises auf die Patenterteilung: **11.01.1995**
(21) Anmeldenummer: 91104080.6
(22) Anmeldetag: 16.03.1991
(51) Int. Cl.: G01M 9/00, G01L 5/16

(54) **Verfahren und Windkanalwaage zur Ermittlung der Kräfte und Momente an einem Fahrzeug**
Procedure and windtunnel balance determining the forces and moments on a vehicle
Procédé et balance pour essais en soufflerie aérodynamique pour déterminer les forces et les moments sur un véhicule

(43) Veröffentlichungstag der Anmeldung: 23.09.1992
(73) Patentinhaber: CARL SCHENCK AG, D-64273 Darmstadt (DE)
(72) Erfinder: Polansky-Schmülling-Ziegert, Lubomir, W-6944 Hemsbach (DE); Giesecke, Peter, Prof. Dr., W-6200 Wiesbaden (DE)
(74) Vertreter: Brandt, Ernst-Ulrich, Dipl.-Phys., Dipl.-Ing.

(56) Entgegenhaltungen:
- EP-A- 0 168 527
- DE-C- 3 715 460
- ICIASF '89, Göttingen, DE, 18.-21. September 1989, IEEE Publication 89 CH2762-3, T. Preusser et al.: "External 6-Component Wind Tunnel Balances For Aerospace Simulation Facilities"

## Beschreibung

Die Erfindung betrifft ein Verfahren und eine Windkanalwaage zur Ermittlung der Kräfte und Momente, die während der Anströmung durch ein Fluid an einem Fahrzeug auftreten.

Zur Messung von aerodynamischen Momenten an Fahrzeugen werden meist 6-oder 7-Komponenten-Windkanalwaagen eingesetzt, wie sie beispielsweise in der DE 37 15 460 C 1 dargestellt sind. Bei 7-Komponenten-Waagen steht jedes Fahrzeugrad auf einer Wägezelle, welche die jeweilige Vertikalkraft mißt. Alle vier Wägezellen sind in einem Rahmen angeordnet, welcher die auf ihn wirkenden Horizontalkräfte über drei weitere Wägezellen in ein fundamentfestes Gestell leitet. Bei den 6-Komponenten-Waagen steht das Fahrzeug mit seinen Reifen auf einer gemeinsamen Plattform, die zur Bestimmung der sechs aerodynamischen Komponenten mittels sechs Wägezellen statisch bestimmt gelagert ist. Die am Fahrzeug wirkenden aerordynamischen Gesamtkräfte und Gesamtmomente werden mit der 6-Komponenten-Waage direkt bestimmt, ohne daß der Radstand oder die Spurweite bekannt sein müssen.

Unbefriedigend ist bei den 7-Komponenten-Windkanalwaagen, daß die tatsächlichen Krafteinleitungspunkte am Reifenlatsch bei der Momentenermittlung nicht berücksichtigt werden. Die Berechnung des Roll-, Nick- und Giermomentes erfolgt nämlich durch Verknüpfung der gemessenen Kräfte mit dem theoretischen Achsabstand bzw. der theoretischen Spurweite. Diese Werte können jedoch insbesondere während der Anströmung ganz erheblich von den tatsächlichen Krafteinleitungspunkten abweichen, weshalb das ermittelte Ergebnis mit einem deutlichen Fehler behaftet ist.

Der Erfindung liegt daher die Aufgabe zugrunde, eine Windkanalwaage bzw. ein Verfahren zur Bestimmung aerodynamischer Kräfte und Momente zu schaffen, welches sich durch eine besonders hohe Präzision auszeichnet. Insbesondere soll das elastische Verhalten von Reifen und Fahrwerksaufhängung berücksichtigt werden und die tatsächlichen Krafteinleitungspunkte korrekt in die Messung und Berechnung eingehen. Diese Aufgabe wird erfindungsgemäß durch ein Verfahren nach Anspruch 1 bzw. durch eine Anordnung nach Anspruch 2 gelöst.

Durch diese erfindungsgemäße Windkanalwaage erhält man nicht nur exakte Werte für das Nick-, Gier-, Rollmoment, die Widerstands-, Auftriebs- und Seitenkraft, sondern es werden zusätzlich auch noch sämtliche Lastkomponenten an den einzelnen Rädern des Fahrzeugs ermittelt.

Dabei ist es nicht unbedingt nötig, alle sechs Komponenten für jedes Fahrzeugrad auch tatsächlich zu messen. Wenn beispielsweise nur das Nickmoment ermittelt werden soll, kann die Messung von zwei Vertikalkraftkomponenten je Waage genügen, um damit den Radstand zu bestimmen und das Nickmoment zu errechnen.

Die 6-Komponentenwaagen können beispielsweise als Plattform - oder als Pyramidenwaagen ausgeführt sein.

Bei etwas niedrigeren Anforderungen an die Meßgenauigkeit können auch Meßringe mit applizierten Dehnungsmeßstreifen verwendet werden.

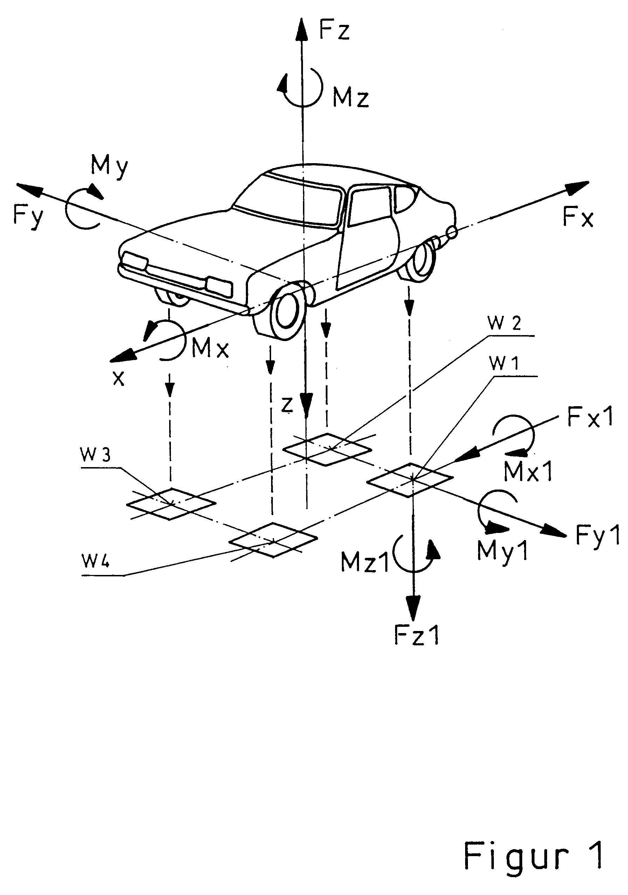

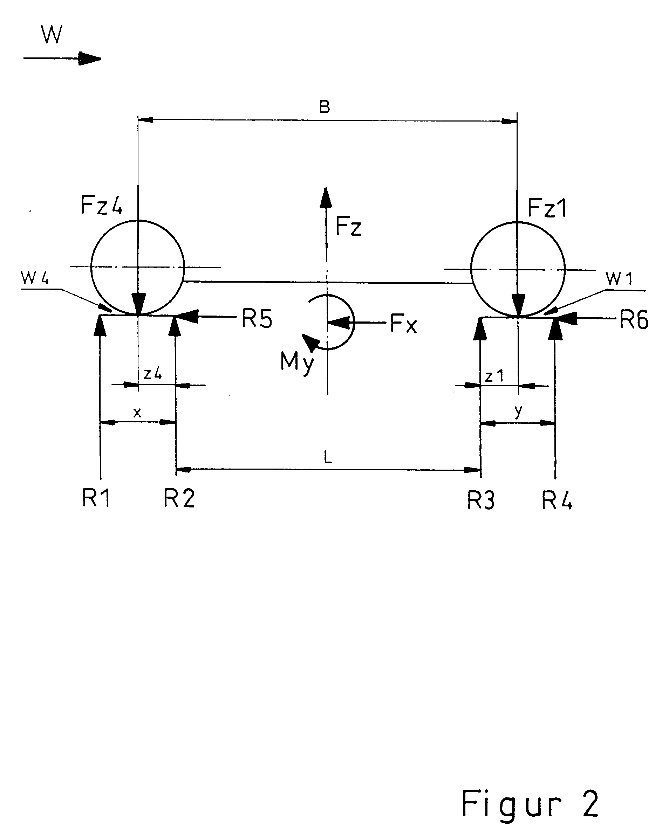

Weitere vorteilhafte Merkmale sowie Aufbau und Funktion eines Ausführungsbeispiels der Erfindung ergeben sich aus der nachstehenden Beschreibung und der Zeichnung. Hierzu zeigt Figur 1 schematisch den prinzipiellen Aufbau der Windkanalwaage und Figur 2 verdeutlicht das erfindungsgemäße Prinzip am Beispiel einer zweidimensionalen Darstellung.

Figur 1 zeigt ein Kraftfahrzeug, welches zur Bestimmung seiner aerodynamischen Momente und Kräfte, insbesondere des Nickmoments My, des Giermoments Mz und des Rollmoments Mx , der Auftriebskraft Fz, der Seitenkraft Fy und der Widerstandskraft Fx, in einem nicht dargestellten Windkanal aufgestellt ist. Jedes der vier Räder steht auf einer separaten 6-Komponenten-Plattformwaage W1 bis W4. Durch die an sich bekannten 6-Komponenten-Waagen lassen sich für jedes einzelne Rad die Kräfte und Momente in den bzw. um die drei Koordinaten bestimmen. Dies ist der Übersichtlichkeit wegen nur für die 6-Komponenten-Waage W1 angedeutet. Eine Berechnung der aerodynamischen Momente mit Hilfe der duch die Waagen W1 bis W4 ermittelten Radlasten Fz1 bis Fz4, Fy1 bis Fy4 und Fx1 bis Fx4 läßt sich nur dann exakt durchführen, wenn die tatsächlichen Achsabstände bzw. Spurweiten berücksichtigt werden.

Diese weichen nämlich aufgrund der Elastizität des Reifens und des Fahrwerkes in Abhängigkeit von der Fahrwerksgeometrie (Sturz, Vorspur, Spreizung, usw.) schon bei nichtangeströmtem Fahrzeug von den theoretischen Werten ab. Diese Abweichung kann sich in Abhängigkeit der vorgenannten Parameter während der Windanströmung gravierend verstärken.

Durch den Einsatz der vier 6-Komponenten-Waagen W1 bis W4 können für jedes Fahrzeugrad sämtliche Kräfte und Momente gemessen werden, außerdem läßt sich der exakte tatsächliche Krafteinleitungspunkt am Reifenlatsch für jedes Fahrzeugrad und somit die tatsächlichen Werte für Achsabstand und Spurweite bestimmen.

Anhand der Fig. 2 soll nun am Beispiel der Bestimmung des Radabstandes das zugrundeliegende Prinzip mittels einer zweidimensionalen Darstellung erklärt werden. Aufgrund der zweidimensionalen Darstellungsweise sind von den beiden 6-Komponenten-Waagen W4 und W1 nur jeweils drei zu messende Reaktionskräfte dargestellt; nämlich R1, R2 und R5 für die Waage W4 und R3, R4 und R6 für die Waage W1. Die Reaktionskräfte stehen stellvertretend für dort angeordnete Wägezellen. Dabei sind R1 bis R4 vertikal verlaufende Reaktionskräfte, während R5 und R6 in horizontaler Richtung liegen. Der Abstand zwischen den beiden einander zugewandten Wägezellen R2 und R3 der Plattformen von W4 bzw. W1 sei L. Der Abstand der Wägezelle R2 der Waage W4 zum tatsächlichen Krafteinleitungspunkt der Radlast Fz4 sei Z4, der Abstand zwischen der Wägezelle R3 der Waage W1 und dem tatsächlichen Krafteinleitungsort der Radlast Fz1 betrage Z1. Der Abstand zwischen den Aufnehmern für die vertikalen Reaktionskräfte R1 und R2 betrage X und der Abstand zwischen den Vertikalkraftaufnehmern R3 und R4 sei Y.

Der tatsächliche Radstand B setzt sich aus L, Z1 und Z4 zusammen. Z4 läßt sich mit den Gesetzen der Statik bei Kenntnis von R1, R2 und X ebenso berechnen wie Z1 unter Verwendung von R3, R4 und Y.

Ist der tatsächliche Radstand B ermittelt, so läßt sich durch Verknüpfungen seines Wertes mit den Radkräften Fz4 Fz1 das Nickmoment My bestimmen. Die Auftriebskraft Fz ergibt sich durch Addition der Vertikalkräfte R1 bis R4, die Widerstandskraft Fx wird durch Addition der Horizontalkräfte R5 und R6 berechnet.

Ein entsprechender Berechnungsgang ergibt sich auch für die Ermittlung der tatsächlichen Spurweite in der X-Y-Ebene und für die Berechnung des Giermomentes Mz, des Rollmomentes Mx und der Seitenkraft Fy.

## Patentansprüche

1. Verfahren zur Ermittlung der Kräfte und Momente, die während der Anströmung durch ein Fluid an einem Fahrzeug auftreten, gekennzeichnet durch folgende Verfahrensschritte:
Ermitteln der ohne Anströmung an jedem Fahrzeugrad angreifenden Kräfte und Momente;
Ermitteln der bei Anströmung an jedem Fahrzeugrad angreifenden Kräfte und Momente;
Bestimmen des resultierenden Kraftvektors und dessen Angriffspunkt am Reifenlatsch eines jeden Fahrzeugrades;
Ermitteln des tatsächlichen Radstandes und der tatsächlichen Spurweite bei Anströmung und Errechnen der am Fahrzeug angreifenden Momente mit den tatsächlichen Krafteinleitungspunkten und Hebelarmen.

2. Windkanalwaage zur Ermittlung der Kräfte und Momente, die während der Anströmung durch ein Fluid an einem Fahrzeug auftreten, dadurch gekennzeichnet, daß jedem einzelnen Fahrzeugrad eine separate 6-Komponenten-Waage zugeordnet ist.

3. Windkanalwaage nach Anspruch 2, dadurch gekennzeichnet, daß sämtliche 6-Komponenten-Waagen einstellbar in einem gemeinsamen Grundgestell angeordnet sind.

4. Windkanalwaage nach Anspruch 2 oder 3, dadurch gekennzeichnet, daß mindestens zwei Kraftkomponenten jeder 6-Komponenten-Waagen gemessen und ausgewertet werden.

5. Windkanalwaage nach einem der Ansprüche 2-4, dadurch gekennzeichnet, daß die 6-Komponenten-Waagen als Plattformwaagen ausgebildet sind.

6. Windkanalwaage nach einem der Ansprüche 2-4, dadurch gekennzeichnet, daß die 6-Komponenten-Waagen als Pyramidenwaagen ausgebildet sind.

7. Windkanalwaage nach einem der Ansprüche 2-4, dadurch gekennzeichnet, daß die 6-Komponenten-Waagen als Meßringe ausgebildet sind.

## Claims

1. A method of determining the forces and moments which occur on a vehicle while a fluid is blowing against it, characterised by the following steps:
determination of the forces and moments acting on each wheel of the vehicle without the fluid blowing against it;
determination of the forces and moments acting on each wheel of the vehicle with the fluid blowing against it;
determination of the resultant force vector and the point where it acts on the contact area of each vehicle wheel;
determination of the actual wheel base and actual track gauge with the fluid blowing against the vehicle, and
calculation of the moments acting on the vehicle with the actual points where the forces are introduced and the leverages.

2. A wind tunnel balance to determine the forces and moments which occur on a vehicle while a fluid is blowing against it, characterised in that a separate 6-component balance is assigned to each individual wheel of the vehicle.

3. A wind tunnel balance according to Claim 2, characterised in that all the 6-component balances are arranged adjustably in a common baseframe.

4. A wind tunnel balance according to Claim 2 or 3, characterised in that at least two force components of each 6-component balance are measured and evaluated.

5. A wind tunnel balance according to any of Claims 2-4, characterised in that the 6-component balances are in the form of platform balances.

6. A wind tunnel balance according to any of Claims 2-4, characterised in that the 6-component balances are in the form of pyramid balances.

7. A wind tunnel balance according to any of Claims 2-4, characterised in that the 6-component balances are in the form of measuring rings.

## Revendications

1. Procédé pour déterminer les forces et les moments qui apparaissent sur un véhicule soumis à l'écoulement d'un fluide, caractérisé par les étapes de procédé suivantes :
- détermination des forces et des moments agissant, sans effet de soufflage, sur chaque roue d'un véhicule;
- détermination des forces et des moments agissant lors d'un soufflage sur chaque roue d'un véhicule;
- détermination du vecteur force résultant et de son point d'application sur la zone aplatie du pneu de chaque roue d'un véhicule;
- détermination de l'empattement réel et la largeur de voie réelle, lors du soufflage, et calcul des moments agissant sur le véhicule avec les points d'introduction de force et les bras leviers réels.

2. Bascule pour essais en soufflerie aérodynamique pour déterminer les forces et les moments qui apparaissent sur un véhicule, pendant le soufflage, au moyen d'un fluide, caractérisé en ce qu'à chaque roue différente d'un véhicule est associée une bascule séparée à 6 composantes.

3. Bascule pour essais en soufflerie aérodynamique selon la revendication 2, caractérisé en ce que l'ensemble des bascules à 6 composantes est disposée réglable sur un bâti de base commun.

4. Bascule pour essais en soufflerie aérodynamique selon la revendication 2 ou 3, caractérisé en ce qu'au moins deux composantes de force de chacune des bascules à 6 composantes sont mesurées et exploitées.

5. Bascule pour essais en soufflerie aérodynamique selon l'une des revendications 2 à 4, caractérisé en ce que les bascules à 6 composantes sont réalisées sous forme de bascules à plate-forme.

6. Bascule pour essais en soufflerie aérodynamique selon l'une des revendications 2 à 4, caractérisé en ce que les bascules à 6 composantes sont réalisées sous forme de bascules pyramides.

7. Bascule pour essais en soufflerie aérodynamique selon l'une des revendications 2 à 4, caractérisé en ce que les bascules à 6 composantes sont réalisées sous forme d'anneaux de mesure.
